# EUROPÄISCHE PATENTSCHRIFT

(11) **EP 0 406 768 B1**
(45) Veröffentlichungstag und Bekanntmachung des Hinweises auf die Patenterteilung: **12.01.1994**
(21) Anmeldenummer: 90112600.3
(22) Anmeldetag: 02.07.1990
(51) Int. Cl.: B01D 53/14

(54) **Verfahren zum Abtrennen eines Lösemittelgemisches aus einem Gasstrom**
Process for eliminating a mixture of solvents from a gas stream
Procédé de séparation d'un mélange de solvants d'un courant de gaz

(30) Priorität: 05.07.1989 DE 3922023
(43) Veröffentlichungstag der Anmeldung: 09.01.1991
(73) Patentinhaber: HOECHST AKTIENGESELLSCHAFT, 65926 Frankfurt am Main (DE)
(72) Erfinder: Streitberger, Horst, D-8262 Altötting (DE); Stankowiak, Achim, Dr., D-8269 Burgkirchen (DE)

(56) Entgegenhaltungen:
- EP-A- 0 146 886
- EP-A- 0 248 541
- EP-A- 0 315 468

## Beschreibung

Die Erfindung betrifft ein Verfahren zum Abtrennen von polaren und unpolaren Lösemitteln aus einem Gasstrom durch Inkontaktbringen des Gasstroms mit einer Absorptionsflüssigkeit aus der Gruppe der Alkylenglykolether zur Aufnahme der Lösemittel aus dem Gasstrom.

Es ist schon seit langem bekannt, Kohlendioxid und Schwefelwasserstoff aus einem Gasstrom, der diese Verbindungen enthält, durch Waschen des Gasstromes mit flüssigen Alkylenglykolethern als Absorptionsmittel zu entfernen. Als vorteilhafte Alkylenglykolether werden die Dimethylether, die Methyl-isopropylether und die C₁ bis C₄-alkyl-tert.-butylether von Ethylenglykolen beschrieben, vergleiche GB-A-1 429 396, US-A-3 877 893 und 4 330 305 und EP-A-0 146 886.

Aus der genannten US-A-3 877 893 ist auch schon bekannt, Ethylenglykoldimethylether als Absorptionsflüssigkeit zu verwenden, um neben den sauren Gasen (Kohlendioxid und Schwefelwasserstoff) auch die unpolaren aromatischen Verbindungen Benzol, Toluol und Xylol aus einem Gasstrom abzutrennen.

Aus der DE-A-23 00 844 (Derwent-Referat V-52252) ist bekannt, daß man mit Hilfe von Ethylenglykolen oder Ethylenglykol-C₁ bis C₄-alkylethern 1,2-Dichlorethan aus einem Gasstrom der Oxichlorierung von Ethylen auswaschen und rückgewinnen kann.

In neuerer Zeit spielt die Reinigung von Gasströmen, die ein Gemisch von einem oder mehreren polaren und einem oder mehreren unpolaren Lösemitteln enthalten, eine immer größere Rolle. Es handelt sich bekanntlich in der Regel um aromatische und/oder aliphatische Verbindungen aus der Gruppe der Alkane, wie Pentan, Hexan, Heptan und dergleichen; Cycloalkane, wie Cyclobutan, Cyclohexan, Cycloheptan und dergleichen; Aromaten, wie Benzol, Styrol, Toluol, Xylol und dergleichen; Alkohole, wie Methanol, Ethanol, Propanol, Isopropanol, Butanol, Hexanol, Cyclohexanol und dergleichen; Ketone, wie Aceton, Methylethylketon, Methylisopropylketon, Butanon, Methylisobutylketon, Diisobutylketon, Methylisoamylketon, Cyclohexanon und dergleichen; Ether, wie Diethylether, Methylethylether, Diisopropylether, Dioxan, Tetrahydrofuran, Ethylenglykolmonomethyl- und -monoethylether, Mono- und Diethylenglykoldimethyl- und -diethylether und dergleichen; halogenierte Kohlenwasserstoffe, wie Chlormethan, Methylenchlorid, Chloroform, Tetrachlorkohlenstoff, Ethylchlorid, Dichlorethan, Trichlorethan, Trichlorethen und die analogen anderen Halogenverbindungen, Monofluordichlormethan, Monofluortrichlormethan, Trifluortrichlorethan, Tetrafluordichlorethan, Dichlorbenzol und dergleichen; Ester, wie Ethylacetat, Butylacetat, Isobutylacetat und dergleichen; Amine und Amide, wie Dimethylamin, Triethylamin, Acetamid, Dimethylformamid, Pyridin und dergleichen.

Die mit polaren und unpolaren Lösemitteln beladene Abluft stammt aus technischen Prozessen und Anlagen, in denen diese organischen Verbindungen hergestellt und/oder eingesetzt werden (Lackieranlagen, Druckereien, Folienveredelung, Klebstoffherstellung, Klebstoffverarbeitung und dergleichen). Das Ziel der Behandlung der Abluft ist ihre Reinigung und die Rückgewinnung der Lösemittel, die sich im Abluftstrom befinden (im allgemeinen in Form von Tröpfchen oder gasförmig) und mehr oder weniger unerwünschte Verunreinigungen darstellen.

Es hat sich herausgestellt, daß die genannten Alkylenglykole und Alkylenglykolether als Reinigungsmittel für mit Lösemitteln verschiedenster Art beladene Abluft nicht den gewünschten Erfolg bringen. Ihre Absorptionswirkung läßt insbesondere im Falle von Kombinationen (Mischungen) aus polaren und unpolaren aromatischen und/oder aliphatischen Verbindungen zu wünschen übrig. Gerade diese Kombinationen liegen aber sehr häufig in Abluftströmen vor.

Die Aufgabe der Erfindung beruht demnach darin, ein flüssiges Absorptionsmittel für Abluftströme vorzuschlagen, das die Reinigung der Abluftströme von Lösemitteln verschiedenster Art bewirkt, insbesondere auch dann, wenn Lösemittel mit polarem und solche mit unpolarem Charakter anwesend sind.

Es wurde gefunden, daß Alkylenglykol-di-n-butylether der nachstehenden Formel I 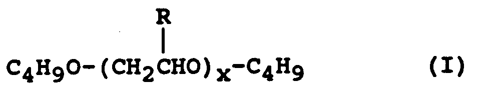
worin R H oder CH₃ ist, vorzugsweise H, und x 1 bis 8 ist, vorzugsweise 2 bis 6, eine besonders geeignete und unerwartet wirksame Absorptionsflüssigkeit zur Lösung der in Rede stehenden Aufgabe darstellen.

Das erfindungsgemäße Verfahren zum Abtrennen von polaren und unpolaren Lösemitteln aus einem Gasstrom durch Inkontaktbringen des Gasstromes mit einer Absorptionsflussigkeit aus der Gruppe der Alkylenglykolether zur Aufnahme der Lösemittel aus dem Gasstrom ist demnach dadurch gekennzeichnet, daß Di-n-butylglykolether der angegebenen Formel I als Absorptionsflüssigkeit eingesetzt werden.

Die oben als Beispiele angeführten Vertreter von den in Rede stehenden Lösemitteln stellen aromatische oder aliphatische Verbindungen mit polarem oder unpolarem (apolarem) Charakter dar. Zu jenen mit unpolarem Charakter zählen bekanntlich die Alkane, Cycloalkane und Aromaten, während beispielsweise die Alkohole als polar gelten. Im folgenden seien noch einige Beispiele für Kombinationen aus polaren und unpolaren Lösemitteln angeführt: Diisopropylether und Butanol; Chloroform und Methylacetat; Heptan und Chloroform; Heptan, Aceton und Ethanol; Cyclohexan, Methylenchlorid und Methanol; Toluol, Dimethylformamid und Methanol.

Die erfindungsgemäß einzusetzenden Dibutylglykolether, von denen jene des Ethylenglykols bevorzugt sind, sind bekannt. Ihre Herstellung erfolgt in der Regel in der Weise, daß man die entsprechenden Alkylenglykolmono-n-butylether zunächst mit Natrium oder einem Alkalimetallhydroxid (im allgemeinen in einem Überschuß von 20 bis 200 Gew.-%) umsetzt zur Bildung des Natriumalkoholats und anschließend das Natriumalkoholat mit n-Butylchlorid umsetzt (das im allgemeinen ebenfalls in einem Überschuß von 20 bis 200 Gew.-% eingesetzt wird) zur Bildung des Di-n-butylglykolethers und Natriumchlorid. Nach Abtrennung des Natriumchlorids kann eine Destillation des Rohproduktes durchgeführt werden, wobei gegebenenfalls nicht umgesetzte Ausgangsverbindungen entfernt und die angestrebten reinen Di-n-butylglykolether gewonnen werden. In der Regel handelt es sich bekanntlich nicht um einen bestimmten Diether allein, sondern um ein sogenanntes Homologengemisch. Beim erfindungsgemäßen Verfahren kann sowohl ein Di-n-butylglykolether allein als auch ein Gemisch von zwei oder mehreren Homologenethern eingesetzt werden. Es versteht sich von selbst, daß die Homologen mit höherem Molekulargewicht viskoser sind als die Homologen mit niedrigerem Molekulargewicht. Daraus ergibt sich, daß man im verfahrenstechnisch üblichen Absorptionstemperaturbereich eher Homologe mit einem mittleren oder höheren Molekulargewicht einsetzen wird, bei niedrigen Absorptionstemperaturen dagegen eher Homologe mit einem relativ niedrigen Molekulargewicht.

Im Falle von einzelnen Vertretern der allgemeinen Formel I sind der Diethylenglykoldibutylether und der Triethylenglykoldibutylether (im wesentlichen aus verfahrenstechnischen Gründen) bevorzugt. Im Falle von Homologengemischen sind solche bevorzugt, die der nachstehend angegebenen Zusammensetzung entsprechen, wobei Bezug genommen wird auf die Formel I mit R = H und x gleich 2 bis 6:

| x | Molekulare Homologenverteilung Gew.-% |
|---|---|
| 2 | 0 bis 15 |
| 3 | 40 bis 80 |
| 4 | 15 bis 30 |
| 5 | 3 bis 10 |
| 6 | 0 bis 5 |

Die Durchführung des erfindungsgemäßen Verfahrens im einzelnen kann nach den gleichen Methoden erfolgen, die für die Behandlung von Gasströmen mit Ethylenglykoldimethylethern als Absorptionsflüssigkeit zur Abtrennung von sauren Gasen bekannt sind. Zur Durchführung des erfindungsgemäßen Verfahrens wird man also vorzugsweise derart vorgehen, daß man (a) die vorgeschlagenen Alkylenglykol-di-n-butylether als Absorptionsflüssigkeit in inniger Berührung mit dem zu reinigenden Gasgemisch in einer Absorptionszone (Absorptionskolonne) führt und so eine Abtrennung der im Gasstrom vorhandenen Lösemittel durch Absorption bewirkt und den gereinigten Gasstrom erhält, und (b) die absorbierten Lösemittel aus der Absorptionsflüssigkeit zur Rückgewinnung der Lösemittel entfernt (Desorption). Der Kontakt der zu reinigenden Abluft mit der Absorptionsflüssigkeit in der Absorptionszone kann bei Minustemperatur bis Raumtemperatur oder einer höheren Temperatur und bei normalem oder erhöhtem Druck durchgeführt werden, er wird vorzugsweise bei einer Temperatur von 0 bis 50 °C durchgeführt, wobei es bevorzugt ist, Wasserdampf oder Stickstoff als Abstreifmittel in der Desorptionszone (Desorptionskolonne) zu verwenden. Das Inkontaktbringen der zu behandelnden Abluft mit der Absorptionsflüssigkeit (die Abluftwäsche) kann ein- oder mehrmals durchgeführt werden.

Das erfindungsgemäße Verfahren weist eine Reihe von Vorteilen auf. Die vorgeschlagenen Alkylenglykol-di-n-butylether besitzen unerwartet wirksame Absorptionseigenschaften für Lösemittel verschiedenster chemischer Struktur und insbesondere auch für Lösemittelgemische, weshalb die angestrebten und häufig sehr niedrigen Grenzkonzentrationen mehr oder weniger leicht erreicht werden. Die physikalisch gebundenen Lösemittel lassen sich andererseits auch wieder leicht abtrennen und rückgewinnen. Die vorgeschlagenen Butylglykolether besitzen offensichtlich ein optimales Verhalten in der Absorption und Desorption von polaren und unpolaren Verbindungen und sind deshalb besonders für solche Lösemittelgemische geeignet. Sie besitzen ferner eine relativ hohe Stabilität auch bei höheren Temperaturen. Die Stabilität kann gegebenenfalls durch Einverleibung von Stabilisatoren, insbesondere von solchen gegen Oxidation, verbessert werden. Die zur Luft- und/oder Wärmestabilisierung von Glykolen und Glykolethern bekannten Verbindungen (Additive) sind auch hier geeignet, zum Beispiel die Verbindungen und Verbindungsgemische, die in der DE-A-37 14 754 (Derwent-Referat 88-316223) beschrieben sind. Eine Absorptionsflüssigkeit für Lösemittel aus Abluftströmen soll einerseits einen relativ niedrigen Dampfdruck bei der Absorptionstemperatur besitzen, um nicht selbst eine Lösemittelkomponente in der Abluft zu werden, und andererseits einen hohen Dampfdruck (niedrigen Siedepunkt) im Hinblick auf den Desorptionsvorgang. Auch bezüglich dieser an sich gegenläufigen Anforderungen stellen die erfindungsgemäß vorgeschlagenen Dibutylglykolether eine besonders vorteilhafte Auswahl dar.
Die nach dem erfindungsgemäßen Verfahren zu reinigenden Abluftströme können die in Rede stehenden Lösemittel in einer mehr oder weniger großen Menge enthalten. In der Regel handelt es sich um Abluftströme mit einem Gehalt an Lösemittel von insgesamt 1 bis 500 g/Nm³.

Die Erfindung wird nun an Beispielen noch näher erläutert.

### Beispiel 1

775 Nm³ von einer Abluft, beladen mit 18 kg Diisopropylether und 20 kg n-Butanol, das ist eine Abluft, die in 1 Nm³ 23,3 g Diisopropylether und 25,8 g n-Butanol enthält, werden in einer Stunde durch eine Füllkörperkolonne mit sechs theoretischen Böden geleitet, und im Gegenstrom dazu 2 158 l von einem Gemisch von Di-n-butylethern des Ethylenglykols der Formel I, das die folgende Verteilung der durch den Wert von x bezeichneten Molekularhomologe aufweist:

| x | Molekularhomolog Gew.-% |
|---|---|
| 2 | 0,5 |
| 3 | 71,0 |
| 4 | 22,0 |
| 5 | 6,2 |
| 6 | 0,3 |

Die Absorptionsflüssigkeit (Waschflüssigkeit) wird mit einer Temperatur von 30 °C eingesetzt (sie erwärmt sich während des Waschvorganges auf 35 °C).
Der die Kolonne verlassende, gewaschene und gereinigte Gasstrom weist nur noch die folgende Restbeladung pro Nm³ auf:

| | |
|---|---|
| Diisopropylether: | 2,5 g |
| n-Butanol: | 0,001 g |

### Beispiel 2

775 Nm³ von einer Abluft, beladen mit 20 kg Chloroform und 20 kg Heptan, das ist eine Abluft, die in 1 Nm³ 25,8 g Chloroform und 25,8 g Heptan enthält, werden in einer Stunde durch die im Beispiel 1 verwendete Füllkörperkolonne geleitet und im Gegenstrom dazu 2 158 l von dem in Beispiel 1 eingesetzten Ethylenglykoldibutylether-Homologengemisch. Die Waschflüssigkeit wird mit einer Temperatur von 30 °C eingesetzt (sie erwärmt sich während des Waschvorganges auf 33 °C).
Der die Kolonne verlassende, gewaschene und gereinigte Gasstrom weist nur noch die folgende Restbeladung pro Nm³ auf:

| | |
|---|---|
| Chloroform: | 0,047 g |
| Heptan: | 0,392 g |

### Beispiel 3

775 Nm³ von einer Abluft, beladen mit 18 kg Diisopropylether und 6 kg n-Butanol, das ist eine Abluft, die in 1 Nm³ 23,3 g Diisopropylether und 7,7 g n-Butanol enthält, werden, wie in den Beispielen 1 und 2, mit 2 265 l Diethylenglykol-di-n-butylether von 10 °C gewaschen (die Waschflüssigkeit erwärmt sich auf 35 °C).
Der die Kolonne verlassende, gewaschene und gereinigte Gasstrom weist nur noch die folgende Restbeladung pro Nm³ auf:

| | |
|---|---|
| Diisopropylether: | 0,029 g |
| n-Butanol: | < 0,001 g |

### Beispiel 4

775 Nm³ von einer Abluft, beladen mit 18 kg Chloroform und 6 kg Heptan, das ist eine Abluft, die in 1 Nm³ 23,3 g Chloroform und 7,7 g Heptan enthält, werden, wie in den Beispielen 1 und 2, mit 2 265 l Diethylenglykol-di-n-butylether von 10 °C gewaschen (die Waschflüssigkeit erwärmt sich auf 35 °C).
Der die Kolonne verlassende, gewaschene und gereinigte Gasstrom weist nur noch die folgende Restbeladung pro Nm³ auf:

| | |
|---|---|
| Chloroform: | 0,003 g |
| Heptan: | < 0,001 g |

### Beispiel 5

775 Nm³ von einer Abluft, beladen mit 20 kg Methylenchlorid und 20 kg Diisopropylether, das ist eine Abluft, die in 1 Nm³ 25,8 g Methylenchlorid und 25,8 g Diisopropylether enthält, werden, wie in den Beispielen 1 und 2, mit 7 883 l Tripropylenglykol-di-n-butylether von 20 °C gewaschen (die Waschflüssigkeit erwärmt sich auf 21,6°C).
Der die Kolonne verlassende, gewaschene und gereinigte Gasstrom weist nur noch die folgende Restbeladung pro Nm³ auf:

| | |
|---|---|
| Methylenchlorid: | 0,002 g |
| Diisopropylether: | 0,010 g |

## Patentansprüche

1. Verfahren zum Abtrennen von polaren und unpolaren Lösemitteln aus einem Gasstrom durch Inkontaktbringen des Gasstromes mit einer Absorptionsflüssigkeit aus der Gruppe der Alkylenglykolether zur Aufnahme der Lösemittel aus dem Gasstrom, dadurch gekennzeichnet, daß Di-n-butylglykolether der nachstehenden Formel I als Absorptionsflüssigkeit eingesetzt werden: 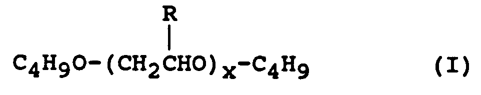 worin R H oder CH₃ ist und x 1 bis 8 ist.

2. Verfahren nach Anspruch 1, dadurch gekennzeichnet, daß Di-n-butylglykolether der Formel I eingesetzt werden, worin x 2 bis 6 ist.

3. Verfahren nach Anspruch 1 oder 2, dadurch gekennzeichnet, daß Di-n-butylglykolether der Formel I eingesetzt werden, worin R H ist.

4. Verfahren nach Anspruch 1, dadurch gekennzeichnet, daß der Diethylenglykol-di-n-butylether oder der Triethylenglykol-di-n-butylether als Absorptionsflüssigkeit eingesetzt wird.

5. Verfahren nach Anspruch 1, dadurch gekennzeichnet, daß ein Gemisch von Ethylenglykol-di-n-butylethern der Formel I eingesetzt wird, das die folgende Verteilung der durch den Wert von x gleich 2 bis 6 bezeichneten Molekularhomologe hat:
| x | Molekularhomolog Gew.-% |
|---|---|
| 2 | 0 bis 15 |
| 3 | 40 bis 80 |
| 4 | 15 bis 30 |
| 5 | 3 bis 10 |
| 6 | 0 bis 5 |

## Claims

1. A process for the removal of polar and nonpolar solvents from a gas stream by contacting the gas stream with an absorption liquid from the group comprising alkylene glycol ethers in order to absorb the solvents from the gas stream, wherein glycol di-n-butyl ethers of the formula I below are used as absorption liquid: 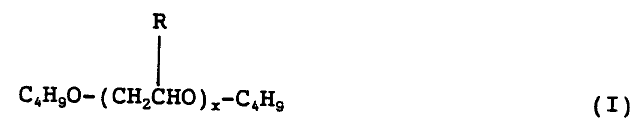 in which R is H or CH₃, and x is 1 to 8.

2. The process as claimed in claim 1, wherein glycol di-n-butyl ethers of the formula I are used in which x is 2 to 6.

3. The process as claimed in claim 1 or 2, wherein glycol di-n-butyl ethers of the formula I are used in which R is H.

4. The process as claimed in claim 1, wherein diethylene glycol di-n-butyl ether or triethylene glycol di-n-butyl ether are used as absorption liquid.

5. The process as claimed in claim 1, wherein a mixture of ethylene glycol di-n-butyl ethers of the formula I is used which has the following distribution of the molecular homologues characterized by the value of x of 2 to 6:
| x | Molecular homologues in % by weight |
|---|---|
| 2 | 0 to 15 |
| 3 | 40 to 80 |
| 4 | 15 to 30 |
| 5 | 3 to 10 |
| 6 | 0 to 5 |

## Revendications

1. Procédé pour séparer de solvants polaires et non polaires d'un courant gazeux par mise en contact du courant gazeux avec un liquide absorbant choisi parmi les alkylèneglycoléthers, pour absorber le solvant en l'extrayant du courant gazeux, caractérisé en ce qu'on utilise le di-n-butylglycoléther ayant la formule I ci-après en tant que liquide absorbant : 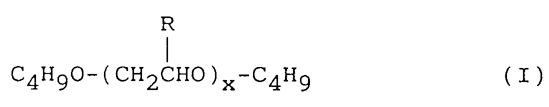 où R est H ou CH₃, et x vaut de 1 à 8.

2. Procédé selon la revendication 1, caractérisé en ce qu'on utilise un di-n-butylglycoléther de formule I dans lequel x vaut de 2 à 6.

3. Procédé selon la revendication 1 ou 2, caractérisé en ce qu'on utilise un di-n-butylglycoléther de formule I dans laquelle R est H.

4. Procédé selon la revendication 1, caractérisé en ce qu'on utilise en tant que liquide absorbant l'éther di-n-butylique du diéthylèneglycol ou l'éther di-n-butylique du triéthylèneglycol.

5. Procédé selon la revendication 1, caractérisé en ce qu'on utilise un mélange d'éthers di-n-butyliques de l'éthylèneglycol de formule I, présentant la répartition suivante des homologues moléculaires, désignés par une valeur de x comprise entre 2 et 6 :
| x | Homologue moléculaire, % en poids |
|---|---|
| 2 | 0 à 15 |
| 3 | 40 à 80 |
| 4 | 15 à 30 |
| 5 | 3 à 10 |
| 6 | 0 à 5 |
